(19) Europäisches Patentamt / European Patent Office / Office européen des brevets

(11) **EP 2 843 731 A2**

(12) **EUROPEAN PATENT APPLICATION**

(43) Date of publication:
04.03.2015 Bulletin 2015/10

(51) Int Cl.:
*H01M 2/20* *(2006.01)*    *H01M 2/10* *(2006.01)*

(21) Application number: **14182503.4**

(22) Date of filing: **27.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.08.2013 KR 20130101587**

(71) Applicant: **Samsung SDI Co., Ltd.**
**Yongin-si, Gyeonggi-do (KR)**

(72) Inventor: **Park, Shi-Dong**
**Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(54) **Battery module**

(57)    A battery module including a plurality of battery cells aligned in one direction; and a bus-bar electrically connecting between a first terminal of one battery cell of the plurality of battery cells and a second terminal of another battery cell of the plurality of battery cells, wherein the bus-bar includes a bus-bar body, and bending portions, the bending portions extending from ends of the bus-bar body.

FIG. 6

EP 2 843 731 A2

## Description

BACKGROUND

1. Field

Embodiments relate to a battery module.

2. Description of the Related Art

A high-power battery module using a non-aqueous electrolyte with high energy density has been considered. The high-power battery module may be configured as a large-capacity battery module manufactured by connecting a plurality of battery cells in series so as to be used in driving motors of devices requiring high power, e.g., electric vehicles or the like. Further, a battery pack can be configured by electrically connecting such a plurality of battery modules to one another.

SUMMARY

Embodiments are directed to a battery module.
The embodiments is realized by providing a battery module including a plurality of battery cells aligned in one direction; and a bus-bar electrically connecting between a first terminal of one battery cell of the plurality of battery cells and a second terminal of another battery cell of the plurality of battery cells, wherein the bus-bar includes a bus-bar body, and bending portions, the bending portions extending from ends of the bus-bar body.
The bus-bar body may have a plate shape.
The bending portions may each have a semicircular shape in cross-section or a semi-elliptical shape in cross-section.
The bending portions may each have a roughly "V" shape in cross-section.
The bending portions, each having the roughly "V" shape in cross-section, may each include a first slope portion extending downwardly from one end of the bus-bar body, and a second slope portion extending upwardly from the first slope portion.
The second slope portion may be surface-adhered closely to the first or second terminal by folding the bending portion in a direction of the first or second terminal.
The bending portion may further include a cut-away groove between the first and second slope portions.
The bending portions, each having the roughly "V" shape in cross-section, may each include a first slop portion extending from an end of the bus-bar body and being inclined with respect to the bus-bar body, and a second slope portion extending from an end of the first slope portion and inclined with respect to the first slope portion.
The end of the first slope portion from which the second slope portion extends may be opposite to another end of the first slope portion that is adjacent to the bus-bar body.
The second slope portion may extend in parallel with and may be coupled with the first terminal of the one battery cell or the second terminal of the other battery cell.
The bending portions may each have a semicircular shape in cross-section, and a radius of the bending portion may be greater than a vertical distance between an end of the bus-bar and one surface of a terminal that has a higher height among the first and second terminals.
The vertical distance may be determined using at least one of a length from a point at which the bending portion is contacted with one surface of the terminal with the high height, a distance between points at which the bending portions are respectively contacted with one surface of the first and second terminals, a height difference between the first and second terminals, an angle at which the bus-bar is inclined by the height difference, and a thickness of the bus-bar.
The bending portion may be welded to a top surface of the first terminal or the second terminal.
The bending portion may be welded to the top surface of the first terminal or the second terminal by laser welding or ultrasonic welding.
A top surface of the first terminal may be on a different plane relative to a top surface of the second terminal.
The bus-bar may be formed of gold, silver, copper, nickel, aluminum, a copper alloy, or an aluminum alloy.

BRIEF DESCRIPTION OF THE DRAWINGS

Features will be apparent to those of skill in the art by describing in detail exemplary embodiments with reference to the attached drawings in which:

FIG. 1 illustrates a perspective view of a battery module according to an embodiment.
FIG. 2 illustrates an exploded perspective view of the battery module shown in FIG. 1.
FIG. 3 illustrates a sectional view showing a state in which a bus-bar is fastened to a terminal portion when a height difference exists between two battery cells.
FIG. 4 illustrates a perspective view of a bus-bar of FIG. 2.
FIG. 5 illustrates a sectional view of the bus-bar of FIG. 2.
FIG. 6 illustrates a sectional view showing a state in which the bus-bar of FIG. 2 is fastened to a terminal portion.
FIG. 7 illustrates a sectional view of a bus-bar of a battery module according to an embodiment.
FIG. 8 illustrates a perspective view of the bus-bar of FIG. 7.
FIGS. 9A and 9B illustrate sectional views showing a state in which a bus-bar of a battery module is fastened to a terminal portion.

FIG. 10 illustrates a perspective view of a bus-bar of a battery module according to still another embodiment.

FIGS. 11A and 11B illustrate sectional views of different states of the bus-bar shown in FIG. 10.

## DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. Like reference numerals refer to like elements throughout.

It will be understood that when an element is referred to as being "between" two elements, it can be the only element between the two elements, or one or more intervening elements may also be present. In addition, when an element is referred to as being "on" another element, it can be directly on the other element or be indirectly on the other element with one or more intervening elements interposed therebetween. Also, when an element is referred to as being "connected to" another element, it can be directly connected to the other element or be indirectly connected to the other element with one or more intervening elements interposed therebetween.

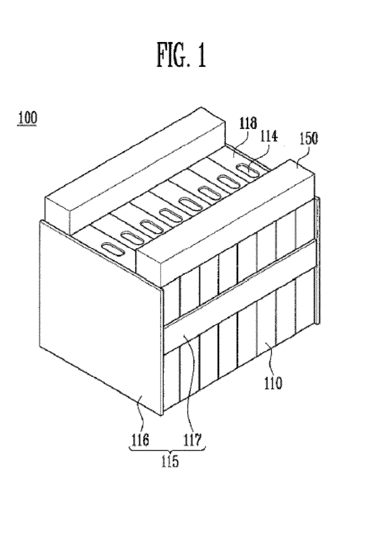

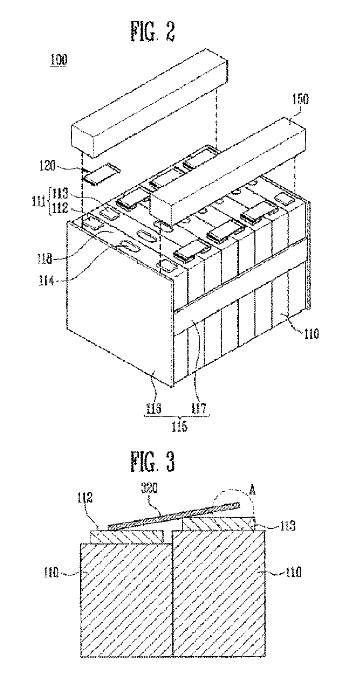

FIG. 1 illustrates a perspective view of a battery module 100 according to an embodiment. FIG. 2 illustrates an exploded perspective view of the battery module 100 shown in FIG. 1. Hereinafter, the battery module 100 according to this embodiment will be described with reference to FIGS. 1 and 2.

As shown in FIGS. 1 and 2, the battery module 100 according to an embodiment may include a plurality of battery cells 110 aligned in one direction, a bus-bar 120 electrically connecting between terminal portions 111 of different (e.g., adjacent) battery cells 110, and a cover member 150 that covers top surfaces 118 of the battery cells 110 (each battery cell 110 having the terminal portion 111).

The battery cell 110 may be a member that generates energy. The plurality of battery cells 110 may be aligned in one direction.

Each battery cell 110 may include a battery case (of which one surface or side is opened), and an electrode assembly and an electrolyte (which are accommodated in the battery case). The electrode assembly and the electrolyte may generate energy through an electrochemical reaction therebetween. The battery case may be hermetically sealed at a top surface 118 of the battery cell 110 including, e.g., a cap assembly. The terminal portion 111 may protrude from the top surface 118 of the battery cell 110. In an implementation, the terminal portion 111 may include a first terminal (positive or negative electrode terminal) 112 and a second terminal (negative or positive electrode terminal) 113, which have different polarities from each other. A vent 114 (acting as a passage through which gas generated in the battery cell 110 is exhausted to the outside of the battery cell 110) may be further formed in the top surface 118 of the battery cell 110 as a safety device of the battery cell 110.

The battery module 100 may further include a fixing portion 115 to align the battery cells 110 in the one direction. In an implementation, the fixing portion 115 may include a pair of end plates 116 (disposed at outsides of the battery cells 110), and a connecting plate 117 (connecting between the end plates 116). The plurality of battery cells 110 may be aligned between the pair of end plates 116. In an implementation, the battery cells 110 may be aligned in parallel so that wide front surfaces of the battery cells 110 are opposite to or face each other. The fixing portion 115 may stably fix the battery cells 110. The fixing portion 115 may be variously modified and embodied. For example, the shape of a housing (entirely accommodating the battery cells 110) may also be included in the fixing portion 115. The connection structure of the battery cells 110 and the number of the battery cells 110 may be variously modified according to the design of the battery module 100. In an implementation, and as illustrated in FIGS. 1 and 2, adjacent battery cells 110 may contact each other. In an implementation, the adjacent battery cells 110 may be positioned to be spaced apart from each other, or a spacer may be provided in a space between the adjacent battery cells 110.

The cover member 150 may cover the top surface 118 of the battery cell 110, e.g., a surface of the battery cell 110 from which the terminal portion 111 protrudes. Accordingly, it is possible to help prevent the terminal portion 111 or the bus-bar 120 from being short-circuited with an external conductor.

The bus-bar 120 may be a member that allows the terminal portions 111 of different battery cells 110 to be electrically connected to each other.

In an implementation, the bus-bar 120, as shown in FIG. 2, may allow two battery cells 110 to be connected in series to each other by electrically connecting the first terminal 112 of any one battery cell 110 to the second terminal 113 of another battery cell 110 (e.g., adjacent to the one battery cell 110). In an implementation, the bus-bar 120 may connect two battery cells 110 in parallel to each other by electrically connecting the second terminal 113 of any one battery cell 110 to the second terminal 113 of another battery cell 110 adjacent to the one battery cell 110. In an implementation, the bus-bar 120 may be formed of, e.g., an electrically conductive metal such as gold, silver, copper, nickel, aluminum, a copper alloy, or an aluminum alloy, so as to electrically connect between the terminal portions 111. The bus-bar 120 may be bonded to the terminal portions 111 through welding, e.g., the bus-bar 120 may be welded to the terminal portions 111. In an implementation, the welding between the bus-bar 120 and the terminal portion 111 may include, e.g., laser welding or ultrasonic welding.

In order to weld the terminal portion 111 and the bus-bar 120, precise and/or close adhesion between the terminal portion 111 and the bus-bar 120 may be desirable.

FIG. 3 illustrates a sectional view showing a state in which a bus-bar is fastened to the terminal portion 111 when a height difference exists between two battery cells 110.

If a height difference exists between two battery cells 110, e.g., as shown in FIG. 3, the first and second terminals 112 and 113 (e.g., top surfaces of the first and second terminals 112 and 113) may form or may be on different planes. Therefore, a bus-bar 320 may not be surface-adhered closely to the second terminal 113 in area A, and one end of the bus-bar 320 may come off. Accordingly, the battery cells 110 may be precisely manufactured so that there exists no height difference between two battery cells 110, or the bus-bar 320 may be manufactured using a flexible material (in addition to copper). However, ensuring that there is not a height difference between the two battery cells 110 or that the bus-bar 320 is manufactured using a flexible conductive material may cause an increase in cost and complexity in manufacturing and assembling processes of the battery module 100. In addition, it may be difficult to ensure the quality of the battery module 100.

According to an embodiment, bending portions 132 may be bent at ends, e.g., both ends, of the bus-bar 120, so that it is possible to compensate for a height difference between the two battery cells 110.

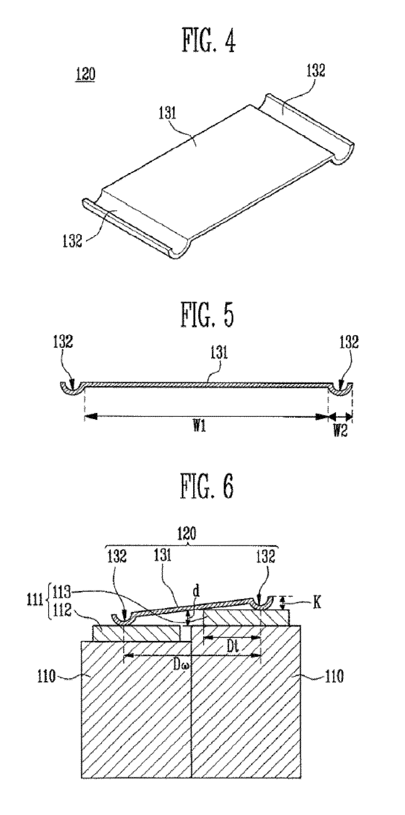

FIG. 4 illustrates a perspective view of the bus-bar of FIG. 2. FIG. 5 illustrates a sectional view of the bus-bar of FIG. 2. FIG. 6 illustrates a sectional view showing a state in which the bus-bar of FIG. 2 is fastened to the terminal portion. Hereinafter, the bus-bar 120 according to this embodiment will be described in detail with reference to FIGS. 4 to 6.

The bus-bar 120 may include a bus-bar body 131 and bending portions 132.

The bus-bar body 131 may have a plate shape. The bending portions 132 may be respectively bent at ends, e.g., both ends, of the bus-bar body 131. Each bending portion 132 may have a roughly "U" shaped cross-section, e.g., may have semicircular shaped cross-section or a semi-elliptical shaped cross-section.

The bending portions 132 may contact top surfaces of the first and second terminals 112 and 113. Thus, even if a height difference exists between two adjacent battery cells 110, the bus-bar 120 may be stably and closely adhered to the terminal portion 111, due to the bent shape of the bending portion 132.

For example, the first and second terminals 112 and 113 may be stably electrically connected by the bus-bar 120. The top surfaces of the first and second terminals 112 and 113 may be bonded to one of the bending portions 132 through welding, e.g., the top surfaces of the first and second terminals 112 and 113 may be welded to the one bending portion 132. The welding may include, e.g., laser welding or ultrasonic welding.

In an implementation, a radius of the bending portion 132 may be greater than a vertical distance K between an end of the bus-bar 120 and one surface of a terminal (e.g., the one terminal that has a higher height among the first and second terminals 112 and 113).

For example, the vertical distance K may be derived from the following Equation 1.

$$\text{Equation 1}$$

$$K = \tan\theta D_t + T/2$$

$$\theta = \tan^{-1}\left(d/D_\omega\right)$$

Here, $D_t$ denotes a length from a point at which the bending portion contacts one surface, e.g., the top surface, of the terminal having the higher height (among the first and second terminals 112 and 113). $D_\omega$ denotes a distance between the points at which the bending portions 132 contact surfaces of the first and second terminals 112 and 113. d denotes a height difference between the first and second terminals 112 and 113. θ denotes an angle at which the bus-bar 120 is inclined by the height difference. T denotes a thickness of the bus-bar 120.

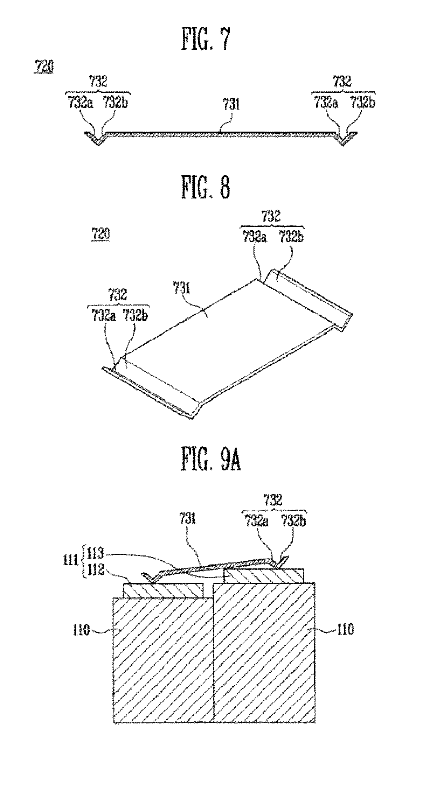

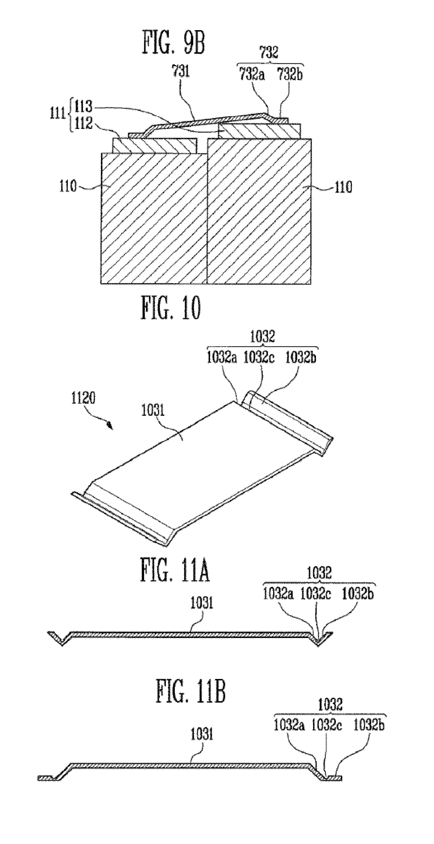

FIG. 7 illustrates a sectional view of a bus-bar of a battery module according to an embodiment. FIG. 8 illustrates a perspective view of the bus-bar of FIG. 7. FIGS. 9A and 9B illustrate sectional views showing a state in which the bus-bar of FIG. 7 is fastened to or coupled with a terminal portion. Hereinafter, the bus-bar according to the present embodiment will be described with reference to FIGS. 7 to 9B. Here, components identical or corresponding to those of the aforementioned embodiment are designated by like reference numerals, and repeated detailed descriptions may be omitted to avoid redundancy.

As shown in FIGS. 7 and 8, the bus-bar 720 may include a bus-bar body 731 and bending portions 732.

The bus-bar body 731 may have a plate shape. The bending portions 732 may be bent at ends, e.g., both ends, of the bus-bar body 731. In an implementation, the bending portion 732 may have a roughly "V" shaped cross-section.

The bending portion 732 may include a first slope portion 732a extending from an end of the bus-bar body 731 and inclined at an angle with respect to the bus-bar body 731. For example, the first slope portion 732a may extend downwardly from the end of the bus-bar body 731. The bending portion 732 may include a second slope portion 732b extending from the first slope portion 732a and inclined at an angle with respect to the first slope portion 732a. For example, the second slope portion 732b may extend upwardly from the first slope portion 732a. For example, the second slope portion 732b may extend from an end of the first slope portion 732a that is opposite to another end of the first slope portion 732a that is adjacent to the bus-bar body 731.

In an implementation, the second slope portion 732b of the bending portion 732 may be foldable.

FIG. 9A illustrates a sectional view showing a state in which the bus-bar is fastened to or coupled with the terminal portion before the second slope portion is folded. FIG. 9B illustrates a sectional view showing a state in which the bus-bar is fastened to or coupled with the terminal portion after the second slope portion is folded.

For example, as shown in FIG. 9B, the second slope portion 732b may be surface adhered closely to the first or second terminal 112 or 113 by folding the bending portion 732 in a direction of or parallel with the first or second terminal 112 or 113. Thus, the bus-bar 720 may be stably and closely adhered to or coupled with the terminal portion 111, even when a height difference exists between two battery cells 110. For example, the bending portions 732 may head have the roughly "V" shape, but may have internal angles of the roughly "V" shape that are different from one another, when the bending portions 732 are coupled with the terminal portions 111. For example, each second slope portion 732b may be parallel with top surfaces of the terminal portions 111 when the second slope portions 732b are closely coupled thereto.

In this case, the top surfaces of the first and second terminals 112 and 113 may be bonded to the second slope portions 732b through welding. The welding may include, e.g., laser welding or ultrasonic welding.

FIG. 10 illustrates a perspective view of a bus-bar of a battery module according to still another embodiment. FIGS. 11A and 11B illustrate sectional views of states of the bus-bar of FIG. 10. Hereinafter, the bus-bar according to the present embodiment will be described with reference to FIGS. 10, 11A, and 11B. Here, components identical or corresponding to those of the aforementioned embodiment are designated by like reference numerals, and repeated detailed descriptions may be omitted to avoid redundancy.

As shown in FIGS. 10, 11A, and 11B, the bus-bar 1120 may include a bus-bar body 1031 and bending portions 1032.

The bus-bar body 1031 may have a plate shape. The bending portions 1032 may have a roughly "V"-shaped cross-section. The bending portions 1032 may be bent at ends, e.g., both ends, of the bus-bar body 1031.

The bending portion 1032 may include a first slope portion 1032a extending from an end of the bus-bar body 1031 and inclined at an angle with respect to the bus-bar body 1031. For example, the first slope portion 1032a may extend downwardly from the end of the bus-bar body 1031. The bending portion 1032 may include a second slope portion 1032b extending from the first slope portion 1032a and inclined at an angle with respect to the first slope portion 1032a. For example, the second slope portion 1032b may extend upwardly from the first slope portion 1032a. For example, the second slope portion 1032b may extend from an end of the first slope portion 1032a that is opposite to another end of the first slope portion 1032a that is adjacent to the bus-bar body 1031. The bending portion 1032 may include a cut-away groove 1032c between the first and second slope portions 1032a and 1032b.

In an implementation, the second slope portion 1032b of the bending portion 1032 may be foldable.

FIG. 11A illustrates a sectional view of the bus-bar before the second slope portion is folded. FIG. 11B illustrates a sectional view of the bus-bar after the second slope portion is folded.

As shown in FIG. 11B, the second slope portion 1032b may be surface-adhered closely to the first or second terminal 112 or 113 by folding the bending portion 1032 in the direction of or parallel with the first or second terminal 112 or 113. For example, the cut-away groove 1032c may facilitate the folding of the second slope portion 1032b. For example, the second slope portion 1032b may be folded outwardly to be parallel with the top surface of an underlying first or second terminal 112 or 113.

By way of summation and review, as the number of devices employing the battery module increases, improving the productivity of the battery module has been considered. As the external appearance of the devices is diversified, a shape of the battery module may be varied. However, the safety of the battery module may be basically secured. Therefore, a structure of a battery module that is capable of satisfying all the requirements have been considered.

A bus-bar may be used as a member that connects a plurality of battery cells. If a height difference exists between battery cells, the bus-bar may not be precisely adhered closely to electrode terminals of the battery cells.

As described above, the bending portions 132, 732, or 1032 may be at ends, e.g., at both ends, of the bus-bar 120, 720, or 1120, so that the bus-bar 120, 720, or 1120 may be stably and closely adhered to or coupled with the terminal portion 111, even if a height difference exists between two battery cells 110.

The embodiments may provide a bus-bar that may be precisely adhered closely to electrode terminals of adjacent battery cells, even when a height difference exists between the adjacent battery cells.

According to an embodiment, the bending portions may be at ends of the bus-bar, so that the bus-bar may be stably adhered closely to the electrode terminals of adjacent battery cells, even when a height difference exists between the adjacent battery cells.

It is clear for a person skilled in the art that the disclosed embodiments can also be combined where possible.

**Claims**

1. A battery module (100), comprising:

   a plurality of battery cells (110) aligned in one direction; and
   a bus-bar (120) electrically connecting between a first terminal (112) of one battery cell of the plurality of battery cells (110) and a second terminal (113) of another battery cell of the plurality of battery cells (110),
   wherein the bus-bar (120) includes:

      a bus-bar body (131), and
      bending portions (132), the bending portions extending from ends of the bus-bar body (131).

2. The battery module as claimed in claim 1, wherein the bus-bar body (131) has a plate shape.

3. The battery module as claimed in claim 1 or 2, wherein the bending portions (132) each have a semicircular shape in cross-section or a semi-elliptical shape in cross-section.

4. The battery module as claimed in claim 1 or 2, wherein the bending portions (732) each have a roughly "V" shape in cross-section.

5. The battery module as claimed in claim 4, wherein the bending portions (732), each having the roughly "V" shape in cross-section, each include:

      a first slope portion (732a) extending downwardly from one end of the bus-bar body (731), and
      a second slope portion (732b) extending upwardly from the first slope portion (732a).

6. The battery module as claimed in claim 4 or 5, wherein the second slope portion (732b) is surface-adhered closely to the first or second terminal (112 or 113) by folding the bending portion in a direction of the first or second terminal (112 or 113).

7. The battery module as claimed in claim 4, wherein the bending portions, each having the roughly "V" shape in cross-section, each include:

      a first slop portion (1032a) extending from an end of the bus-bar body (731) and being inclined with respect to the bus-bar body, and
a second slope portion (1032b) extending from an end of the first slope portion (1032a) and inclined with respect to the first slope portion (1032a).

8. The battery module as claimed in claim 7, wherein the end of the first slope portion (1032a) from which the second slope portion (1032b) extends is opposite to another end of the first slope portion (1032a)that is adjacent to the bus-bar body (731).

9. The battery module as claimed in claim 7 or 8, wherein the second slope portion (1032b) extends in parallel with and is coupled with the first terminal (112) of the one battery cell (110) or the second terminal (113) of the other battery cell (110).

10. The battery module as claimed in one of claims 6 to 9, wherein the bending portion further includes a cutaway groove (1032c) between the first and second slope portions (1032a, 1032b).

11. The battery module as claimed in claim 1 or 2, wherein:

      the bending portions (132) each have a semicircular shape in cross-section, and
      a radius of the bending portion (132) is greater than a vertical distance between an end of the bus-bar (120) and one surface of a terminal that has a higher height among the first and second terminals.

12. The battery module as claimed in claim 11, wherein the vertical distance is determined using at least one of a length from a point at which the bending portion (132) is contacted with one surface of the terminal with the high height, a distance between points at which the bending portions are respectively contacted with one surface of the first and second terminals, a height difference between the first and second terminals, an angle at which the bus-bar is inclined by the height difference, and a thickness of the bus-bar (120).

13. The battery module as claimed in one of preceding claims, wherein the bending portion (132) is welded to a top surface of the first terminal (112) or the second terminal (113).

14. The battery module as claimed in claim 13, wherein the bending portion (132) is welded to the top surface of the first terminal o(112) r the second terminal (113) by laser welding or ultrasonic welding.

15. The battery module as claimed in one of preceding claims wherein a top surface of the first terminal (112) is on a different plane relative to a top surface of the second terminal (113), and/or

wherein the bus-bar (131)is formed of gold, silver, copper, nickel, aluminum, a copper alloy, or an aluminum alloy.

# FIG. 1

# FIG. 2

# FIG. 3

## FIG. 4

## FIG. 5

## FIG. 6

## FIG. 7

## FIG. 8

## FIG. 9A

FIG. 9B

FIG. 10

FIG. 11A

FIG. 11B